# FASCICULE DE BREVET EUROPEEN

(11) **EP 3 102 868 B1**
(45) Date de publication et mention de la délivrance du brevet: **28.07.2021**
(21) Numéro de dépôt: 15706885.9
(22) Date de dépôt: 03.02.2015
(51) Int. Cl.: F17C 5/00, F17C 6/00, F17C 9/00

(54) **INSTALLATION DE DÉLIVRANCE ET DE TRAITEMENT DE LIQUIDE CRYOGÉNIQUE**
ANLAGE ZUR BEREITSTELLUNG UND BEHANDLUNG VON KRYOGENER FLÜSSIGKEIT
FACILITY FOR DELIVERY AND TREATMENT OF CRYOGENIC LIQUID

(30) Priorité: 03.02.2014 FR 1400301
(43) Date de publication de la demande: 14.12.2016
(73) Titulaire: Cryostar SAS, 68220 Hesingue (FR)
(72) Inventeur: OURY, Simon, F-68300 Saint-Louis (FR); HEISCH, Philippe, F-90000 Belfort (FR)
(74) Mandataire: Meilinger, Claudia Sabine
(86) Numéro de dépôt international: PCT/FR2015/050246
(87) Numéro de publication internationale: WO 2015/114283

(56) Documents cités:
- WO-A1-2010/151107
- US-A- 5 537 828
- US-A1- 2002 157 402

## Description

La présente invention concerne une installation de délivrance et de traitement de liquide cryogénique.

L'invention peut concerner tout type de liquide cryogénique, c'est-à-dire tout liquide obtenu en refroidissant à de très basses températures (généralement inférieures à -100° C) des gaz (purs ou mélanges de gaz) comme par exemple de l'azote, de l'hélium ou du gaz naturel (méthane).

Pour certaines utilisations de liquides cryogéniques, le liquide est stocké dans une cuve de relativement grande taille et des moyens sont prévus pour délivrer de relativement petites quantités de liquide dans des conteneurs, comme par exemple un réservoir d'un camion ou une bonbonne de liquide cryogénique. On a ainsi une station de ravitaillement avec une cuve de stockage et des moyens de distribution sous pression adaptés au conteneur à remplir comportant généralement une pompe permettant de transférer du liquide cryogénique à partir de la cuve de stockage vers une bonbonne et/ou d'effectuer un ravitaillement d'un véhicule. Dans la suite de la description, pour alléger la rédaction, on assimilera les transferts de liquide (de la cuve vers par exemple une bonbonne ou un dewar) à un ravitaillement (de la cuve vers un réservoir d'un véhicule). Lors de cette opération de délivrance (transfert ou ravitaillement), le liquide cryogénique peut subir un traitement qui modifiera notamment sa pression et sa température. En effet, notamment lorsqu'il s'agit d'un ravitaillement d'un réservoir d'un véhicule, le liquide doit être délivré dans le réservoir dans des conditions de température et de pression prédéterminées, différentes des conditions régnant dans la cuve de stockage.

Dans une station de ravitaillement, des conduites sont utilisées entre la cuve de stockage et le conteneur à remplir. Une conduite présentant une surface importante par rapport à son volume intérieur, on réalise alors une surface d'échange relativement importante qui tend à réchauffer le liquide cryogénique et à le vaporiser.

Dans le cas d'une station de ravitaillement de gaz naturel liquéfié (ou GNL), le gaz sous forme gazeuse ne peut pas être rejeté à l'air libre et les stations de ravitaillement prévoient alors de le retourner dans la cuve de stockage. Ceci peut être vrai pour d'autres produits cryogéniques.

Le gaz que l'on vient introduire dans la cuve de stockage vient réchauffer le liquide dans cette cuve. La pression à l'intérieur de cette dernière augmente et lorsqu'elle atteint une limite prédéterminée, une soupape de sécurité s'ouvre pour laisser du gaz s'échapper. Ce gaz est généralement perdu. Il convient donc d'éviter d'atteindre la pression maximale admissible dans les cuves de stockage.

Ce problème de vaporisation du liquide cryogénique entre la cuve de stockage et le conteneur à remplir est d'autant plus manifeste que l'installation de délivrance est peu utilisée. En effet, si les délivrances de liquide sont espacées dans le temps, tous les éléments se trouvant en aval de la cuve de stockage se réchauffent plus entre deux délivrances et il convient d'évacuer les calories qui sont rentrées dans le système. De plus, pour que la pompe et/ou tout équipement de traitement du fluide fonctionnent dans de bonnes conditions, ils doivent travailler en phase liquide. Il convient donc de refroidir ces équipements avant de délivrer du liquide cryogénique.

Dans les stations de ravitaillement qui délivrent de façon aléatoire de petites quantités de liquide cryogénique, les conduites entre la cuve de stockage et le conteneur à remplir restent remplies de liquide qui petit à petit se vaporise. Plus les délivrances de liquide effectuées sont occasionnelles, plus les conduites et autres équipements (pompe, moyens utilisés pour la distribution, ...) se réchauffent entre deux opérations de délivrance.

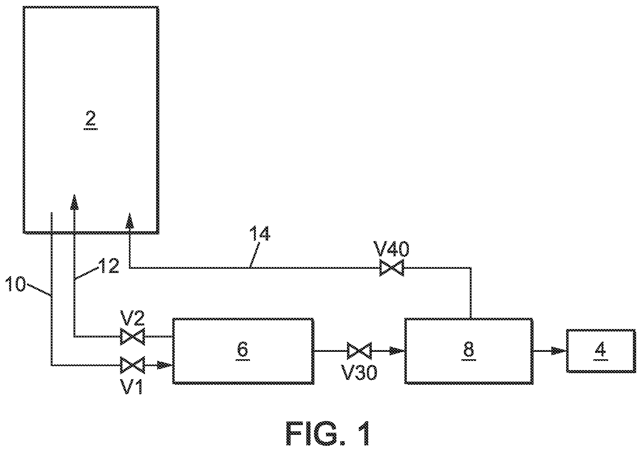

La figure 1 illustre une station de ravitaillement de l'art antérieur. Une cuve de stockage 2 alimente par exemple un réservoir 4 à remplir par l'intermédiaire d'un équipement cryogénique comportant le plus souvent une pompe cryogénique 6 et un autre équipement 8 de traitement du liquide. Une première conduite 10 permet d'alimenter la pompe 6 à partir de la cuve de stockage 2 tandis qu'une deuxième conduite 12 est prévue pour réaliser un retour de la pompe 6 vers la cuve de stockage 2. La pompe 6 présente également une sortie alimentant l'équipement 8 de traitement du liquide cryogénique avant que ce liquide ne soit envoyé vers le réservoir 4. Une troisième conduite 14 est prévue pour réaliser un retour de l'équipement 8 vers la cuve de stockage 2.

Comme illustré, une première vanne V1 est utilisée pour contrôler le flux de liquide dans la première conduite 10, une deuxième vanne V2 permet de contrôler le retour de fluide à partir de la pompe 6 vers la cuve de stockage 2 via la deuxième conduite 12, une vanne V30 permet de commander l'alimentation de l'équipement 8 de traitement à partir de la pompe 6 tandis qu'une vanne V40 régule le retour vers la cuve de stockage 2 à partir de l'équipement 8.

Lorsque le système n'a pas réalisé de ravitaillement (ou tout autre délivrance de liquide, transfert ou ravitaillement), il convient de procéder tout d'abord au refroidissement de la pompe 6 et de l'équipement 8 avant de commencer à remplir le réservoir 4. Une première étape prévoit le refroidissement de la pompe 6. Les vannes V1 et V2 sont ouvertes, tandis que la vanne V30 est fermée. Une boucle fermée entre la cuve de stockage 2 et la pompe 6 est alors réalisée. La deuxième conduite 12 ramène vers la cuve de stockage 2 un mélange de liquide et de gaz. Lorsque la pompe 6 est refroidie, la vanne V30 s'ouvre pour laisser le liquide aller vers l'équipement 8. La vanne V1 peut se fermer progressivement tandis que la vanne V40 est ouverte de manière à créer un circuit entre la cuve de stockage 2 et l'équipement 8 afin de permettre le refroidissement de ce dernier. Après refroidissement de l'équipement 8, du liquide peut alors venir remplir le réservoir 4.

Dans une telle station de ravitaillement, lorsque plusieurs heures s'écoulent entre deux opérations de délivrance de liquide cryogénique, tout le liquide qui reste dans les conduites après la fin de la première opération de délivrance a le temps de se vaporiser avant le début de la seconde opération de délivrance. Ceci conduit à des retours importants de gaz en phase gazeuse dans la cuve de stockage 2.

Comme il ressort de ce qui précède, on a alors deux principales sources d'entrée de chaleur dans la cuve de stockage :
- tout d'abord lors des opérations de refroidissement des équipements (pompe et autre(s) équipement(s) de traitement), de la chaleur issue de ces équipements est renvoyée vers la cuve de stockage, et
- ensuite, après une opération de ravitaillement (ou similaire), le liquide restant dans le système se vaporise et retourne dans la cuve de stockage réalisant alors une autre source de réchauffement du liquide stocké dans la cuve.

Le document US-5,537,828 concerne quant à lui un système pour lancer le fonctionnement d'une pompe cryogénique dans laquelle la conduite d'aspiration vers la pompe cryogénique et la pompe cryogénique elle-même sont amenées séquentiellement à la température correcte de refroidissement à l'aide de systèmes de commandes séparés basés sur la température. Ce document divulgue un système de pompe cryogénique comprenant un réservoir de liquide à base pression contenant un liquide cryogénique, un conduit d'aspiration allant du réservoir de liquide à basse pression à une pompe cryogénique, ledit conduit d'aspiration comportant une ligne de dérivation munie d'une vanne de dérivation, une ligne de refroidissement communiquant avec la pompe cryogénique et portant une vanne de ligne de refroidissement, une citerne de stockage à haute pression, et un conduit de sortie allant de la pompe cryogénique à la citerne de stockage à haute pression et portant une vanne de sortie. Le document US2002/0157402 divulgue un dispositif, dans lequel la pompe reste immergée dans du liquide cryogénique.

La présente invention a alors pour but de limiter les entrées sous forme gazeuse dans la cuve de stockage.

À cet effet, la présente invention propose une installation de délivrance de liquide cryogénique à partir d'une cuve de stockage telle que définie par la revendication 1.

L'enceinte intermédiaire prévue ici peut alors être utilisée pour recueillir les vapeurs en provenance d'une opération de refroidissement de l'équipement cryogénique et éviter ainsi tout renvoi de vapeurs, et donc de chaleur, vers la cuve de stockage. L'enceinte intermédiaire peut être utilisée pour le stockage de cette chaleur récupérée lors de l'opération de refroidissement et être fournie au conteneur à remplir. En effet, dans la grande majorité des cas, les conteneurs à remplir doivent de préférence contenir un liquide saturé et les entrées de chaleur sont moins critiques au niveau du conteneur à remplir, qui est forcément de taille bien inférieure à celle de la cuve, qu'au niveau de la cuve.

Les moyens d'alimentation en liquide cryogénique à partir de la cuve de stockage vers l'enceinte intermédiaire sont de préférence tels qu'ils permettent une alimentation en liquide cryogénique sans passer par l'équipement cryogénique. L'équipement cryogénique peut quant à lui avantageusement être alimenté en liquide cryogénique soit par la cuve de stockage, soit par l'enceinte intermédiaire.

L'équipement cryogénique comporte par exemple une pompe et/ou un équipement pour le traitement du liquide cryogénique permettant d'adapter par exemple sa température et/ou sa pression.

Il est proposé que l'enceinte intermédiaire soit disposée de telle sorte par rapport à la cuve de stockage que du liquide cryogénique puisse être transféré de la cuve de stockage vers l'enceinte intermédiaire par gravité. On peut alors directement transférer du liquide de la cuve de stockage vers l'enceinte intermédiaire, sans pompe ou tout autre équipement de transfert.

Pour permettre de mieux contrôler notamment la pression et/ou la température au sein de l'enceinte intermédiaire, cette dernière est avantageusement équipée d'un système de refroidissement et/ou d'un vaporisateur en circuit fermé avec l'enceinte intermédiaire, le vaporisateur étant relié en amont à une zone inférieure de l'enceinte intermédiaire.

Dans une installation selon la présente invention, l'équipement cryogénique comporte de préférence une pompe cryogénique. Cette pompe peut alors être utilisée pour transférer du liquide vers le conteneur à remplir mais également pour vider l'enceinte intermédiaire. Une forme de réalisation avantageuse prévoit alors que la pompe cryogénique est disposée à l'intérieur de l'enceinte intermédiaire. L'enceinte intermédiaire permet alors à la fois de stocker du liquide cryogénique et de maintenir la pompe froide.

On peut prévoir une ligne de dégazage pour permettre un dégazage d'un conteneur à remplir vers l'enceinte intermédiaire. On évite de la sorte le dégazage de ce conteneur en direction de la cuve de stockage.

Pour permettre une purge efficace en fin d'opération de délivrance de liquide cryogénique, une installation selon la présente invention présente avantageusement un point bas entre la cuve de stockage et l'équipement cryogénique. L'idée est alors de refouler un maximum de liquide se trouvant dans les conduites de l'installation après la délivrance de liquide vers la cuve de stockage, sous forme encore liquide afin de limiter au maximum les entrées de chaleur dans la cuve. Une variante avantageuse prévoit que l'installation est conçue de manière à présenter en aval du point bas une inclinaison de même sens en direction du conteneur à remplir.

La présente invention propose également un procédé de délivrance d'un liquide cryogénique à partir d'une cuve de stockage vers un conteneur à remplir, à travers un équipement cryogénique permettant de délivrer et/ou de traiter du liquide cryogénique de la cuve de stockage vers le conteneur à remplir, comportant les étapes suivantes :
a) remplissage partiel d'une enceinte intermédiaire avec du liquide cryogénique en provenance de la cuve de stockage,
b) refroidissement de l'équipement cryogénique en alimentant l'équipement cryogénique en liquide cryogénique et en retournant le fluide sortant de l'équipement au moins partiellement dans l'enceinte intermédiaire,
c) après refroidissement de l'équipement cryogénique, délivrance de liquide cryogénique vers le conteneur à remplir à partir de l'enceinte intermédiaire et/ou de la cuve de stockage.

Dans un procédé selon l'invention, l'étape de délivrance de fluide cryogénique est par exemple réalisée en ajustant la pression dans l'enceinte intermédiaire de manière à pousser du liquide cryogénique vers le conteneur à remplir.

On peut aussi prévoir dans un procédé selon l'invention qu'une étape de régulation de la température et/ou de la pression soit réalisée dans l'enceinte intermédiaire après refroidissement de l'équipement cryogénique.

Des détails et avantages de la présente invention apparaitront mieux de la description qui suit, faite en référence au dessin schématique annexé sur lequel :
La figure 1 illustre schématiquement une installation de délivrance de liquide cryogénique de l'art antérieur, et
La figure 2 illustre schématiquement une installation de délivrance de liquide cryogénique selon la présente invention.

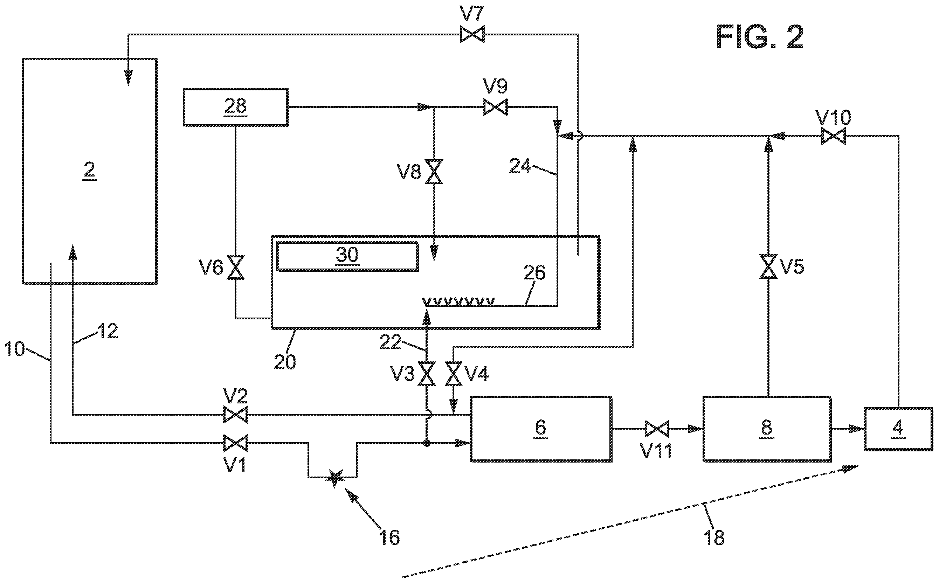

On retrouve sur la figure 2 une installation présentant une structure similaire à celle de la figure 1. On retrouve ici des éléments similaires qui sont alors désignés avec les mêmes références que sur cette figure 1.

On reconnaît ainsi notamment sur la figure 2 une cuve de stockage 2 de liquide cryogénique qui alimente un conteneur à remplir (que l'on supposera être un réservoir 4 dans toute la suite de la présente description) par l'intermédiaire d'une pompe 6 cryogénique et d'un équipement 8 cryogénique de traitement. Une première conduite 10 permet d'alimenter la pompe 6 à partir de la cuve de stockage 2 tandis qu'une deuxième conduite 12 est prévue pour réaliser un retour de la pompe 6 vers la cuve de stockage 2. La pompe 6 présente également une sortie alimentant l'équipement 8 de traitement du liquide cryogénique avant que ce liquide ne soit envoyé vers le réservoir 4.

La cuve de stockage 2 est une cuve cryogénique adaptée à contenir un liquide à très basse température comme par exemple du gaz naturel liquéfié, ou bien un autre gaz sous forme liquide comme de l'azote ou de l'hydrogène. Des moyens connus de l'homme du métier et non décrits ici sont associés à cette cuve de stockage 2 pour éviter que la pression à l'intérieur de celle-ci ne dépasse une limite prédéfinie. Lorsque la cuve contient du gaz naturel liquéfié, il convient de ne pas rejeter de gaz dans l'atmosphère et des moyens adaptés sont également prévus pour éviter tout rejet non désiré.

Le réservoir 4 à remplir est ici par exemple un réservoir d'un véhicule tel un camion ou similaire mais il pourrait également s'agir par exemple d'un récipient tel un dewar ou une bonbonne.

Pour délivrer du liquide cryogénique au réservoir 4, il n'est pas nécessaire de prévoir une pompe telle la pompe 6 qui est optionnelle. Selon les conditions de température et de pression souhaitées au niveau du réservoir 4, on peut éventuellement prévoir de n'avoir qu'un équipement 8 adapté pour la délivrance de liquide cryogénique avec les composants habituels équipant un dispositif de distribution tels qu'ils sont connus de l'homme du métier et non décrits dans le détail ici (clapet anti-retour, régulateur de pression, moyens d'étanchéité, ...). L'équipement 8 cryogénique, et aussi éventuellement la pompe 6, comportent aussi généralement des moyens de commande et de contrôle. Il est aussi prévu généralement des moyens permettant, d'une part, d'adapter la pression et/ou la température du liquide et, d'autre part, de s'assurer que la pompe n'admet que du liquide et qu'elle ne travaille pas partiellement en phase gazeuse. La pompe 6 et l'équipement cryogénique 8 sont alimentés à partir de la cuve de stockage 2 par la première conduite 10 et le réservoir 4 est alimenté à partir de l'équipement 8 par un flexible ou autre. La deuxième conduite 12 est quant à elle prévue pour ramener vers la cuve de stockage 2 les vapeurs issues de la vaporisation du liquide cryogénique au sein de la pompe 6. La figure 2 illustre un retour de la deuxième conduite 12 en partie basse de la cuve de stockage 2 mais on pourrait également prévoir un retour en partie haute de celle-ci.

Comme illustré sur la figure 2, la première conduite 10 comporte un point bas 16 (illustré par une étoile) disposé entre la cuve de stockage 2 et l'ensemble cryogénique formé par la pompe 6 et l'équipement 8 cryogénique. Une vanne V1 sur la première conduite 10, disposée ici entre la cuve de stockage 2 et le point bas 16, permet de contrôler le débit de liquide cryogénique dans la première conduite 10. Une telle vanne peut être par exemple disposée directement en sortie de la cuve de stockage 2. Le plus souvent, les cuves de stockage sont munies d'origine d'une telle vanne V1 qui peut être appelée par exemple vanne de sortie de la cuve.

De préférence, le point bas 16 est relié directement, ou uniquement via la vanne V1, à la cuve de stockage 2. La première conduite 10 présente une pente constante, sans remontée, entre la cuve de stockage 2 et le point bas 16. Dans une forme de réalisation avantageuse (ne correspondant pas à la forme de réalisation illustrée), la première conduite 10 peut être une conduite verticale depuis la cuve jusqu'au point bas 16 qui se trouve alors sous la cuve de stockage 2.

En aval du point bas 16 et au moins jusqu'à l'équipement 8 cryogénique (et de préférence même jusqu'au réservoir 4), la première conduite 10 (et avantageusement aussi son prolongement vers le réservoir 4) ne présente de préférence aucun point bas relatif, c'est-à-dire qu'elle est toujours inclinée avec une pente de même sens, de telle sorte que tout le liquide contenu dans la première conduite 10 se retrouve attiré par gravité vers le point bas 16. Cette pente continue entre le point bas 16 et l'équipement 8, voire le réservoir 4, est symbolisée par une flèche inclinée 18 sur la figure 2.

Une vanne V2 est également prévue sur la deuxième conduite 10 pour contrôler et réguler le débit gazeux vers la cuve de stockage 2. De manière habituelle, une telle vanne est disposée à proximité de la cuve de stockage 2 et équipe le plus souvent d'origine la cuve de stockage 2.

On remarque sur la figure 2 la présence d'une enceinte intermédiaire 20 formant un tampon entre la cuve de stockage 2 et le réservoir 4. Comme il ressort de la suite de la présente description, l'enceinte intermédiaire 20 est une enceinte de récupération de la chaleur, notamment de la chaleur "récupérée" lors d'une opération de mise en froid de la pompe 6 et/ou de l'équipement 8.

Cette enceinte intermédiaire 20 est un conteneur cryogénique destiné à contenir du liquide cryogénique à très basse température et dans des conditions de pression prédéterminées. De manière classique, le liquide cryogénique se trouvant dans l'enceinte intermédiaire 20 est en équilibre avec une phase gazeuse. La phase liquide se trouve en partie basse de l'enceinte intermédiaire 20 et la phase gazeuse en partie haute.

L'enceinte intermédiaire 20 peut être alimentée en liquide cryogénique par une dérivation 22 de la première conduite 10 se trouvant en amont de la pompe 6 cryogénique. Le flux dans cette dérivation 22 est contrôlé par une vanne V3.

Un réseau de conduites est prévu pour permettre l'évacuation du liquide cryogénique qui se vaporise au cours du fonctionnement du système décrit. De manière originale, il est proposé de conduire les vapeurs collectées dans ce réseau, au moins dans un premier temps, vers l'enceinte intermédiaire 20.

On trouve ainsi tout d'abord une dérivation de la deuxième conduite 12, contrôlée par une vanne V4, en sortie de la pompe 6.Une vanne V5 est prévue pour contrôler le dégazage de l'équipement 8 cryogénique. Il est également prévu de renvoyer vers l'enceinte intermédiaire 20 les vapeurs contenues dans le réservoir 4. Une vanne V10 est prévue sur la conduite de dégazage correspondante. Les conduites comportant les vannes V4, V5 et V10, dans la forme de réalisation illustrée sur la figure 2, mènent à un collecteur 24 qui ramène les vapeurs collectées vers le fond de l'enceinte intermédiaire 20. Ces vapeurs sont introduites par une rampe 26 dans le liquide se trouvant dans l'enceinte intermédiaire 20. On pourrait ici aussi envisager de réintroduire les vapeurs collectées dans la partie supérieure de l'enceinte intermédiaire 20, c'est-à-dire dans la partie de cette enceinte contenant généralement du fluide en phase gazeuse.

Pour permettre un dégazage éventuel de l'enceinte intermédiaire 20, une conduite relie la partie supérieure de l'enceinte intermédiaire 20 à la cuve de stockage 2. Une vanne V7 permet de réguler le flux dans cette conduite. Ici aussi, la figure 2 représente une conduite débouchant en partie haute de la cuve de stockage 2 mais il est tout à fait envisageable ici d'introduire le fluide en phase gazeuse essentiellement en provenance de l'enceinte intermédiaire dans la partie basse (contenant du liquide) de la cuve de stockage 2.

Un vaporisateur 28 est associé à l'enceinte intermédiaire 20. Il a pour but de vaporiser, quand c'est nécessaire, du liquide se trouvant dans l'enceinte intermédiaire 20 pour l'y réintroduire sous forme gazeuse. Une vanne V6 contrôle l'alimentation en liquide du vaporisateur 28. Sur la figure 2 illustrant un mode de réalisation préféré, le fluide en phase gazeuse sortant du vaporisateur 28 peut être réintroduit en partie haute de l'enceinte intermédiaire 20, c'est-à-dire dans la zone de celle-ci destinée à contenir du fluide en phase gazeuse, ou bien en partie basse de cette enceinte, dans la zone de celle-ci destinée à contenir du liquide. Une vanne V8 contrôle l'introduction du fluide issu du vaporisateur 28 dans la partie haute de l'enceinte intermédiaire 20 et une vanne V9 contrôle l'introduction du fluide issu du vaporisateur 28 dans la partie basse de l'enceinte intermédiaire 20. Pour l'introduction dans la partie basse de l'enceinte intermédiaire 20, on peut prévoir que le fluide issu du vaporisateur 28 est introduit dans le collecteur 24.

Le vaporisateur 28 peut être utilisé pour augmenter la température et/ou la pression au sein de l'enceinte intermédiaire 20.

Il est également prévu un système de refroidissement 30 illustré très schématiquement sur la figure 2 pour permettre de réduire la température et/ou la pression dans l'enceinte intermédiaire 20.

On remarque enfin la présence d'une vanne de régulation V11 entre la pompe 6 et l'équipement 8.

Le fonctionnement de l'installation de délivrance d'un liquide cryogénique décrite ci-dessus est par exemple le suivant.

Avant de réaliser une opération de ravitaillement (ou de transfert), comme évoqué plus haut, le système est refroidi selon une procédure adaptée à la pompe 6 et à l'équipement 8 cryogénique. Cette procédure a notamment pour but de garantir un bon fonctionnement de la pompe (et/ou des autres équipements) intégrée dans l'équipement cryogénique. Comme indiqué plus haut, la présence d'une pompe est ici optionnelle et l'invention peut être mise en œuvre sans la pompe 6.

Avant de mettre en température la pompe 6 et l'équipement 8, il est proposé de transférer du liquide cryogénique depuis la cuve de stockage 2 vers l'enceinte intermédiaire 20. De préférence, ce transfert de liquide est réalisé par gravité. Les vannes V1 et V3 du système sont alors ouvertes. Pour permettre un dégazage du système, on ouvre également la vanne V2 et V4 et/ou la vanne V7, autorisant ainsi un retour des vapeurs vers la cuve de stockage 2. L'enceinte intermédiaire 20 est par exemple remplie à moitié environ, soit par exemple entre 1/3 et 2/3 de sa capacité en liquide.

Pour refroidir la pompe 6, du liquide est envoyé dans celle-ci (du liquide peut traverser la pompe même lorsque celle-ci n'est pas mise en marche) et le flux sortant de celle-ci, tout d'abord essentiellement du gaz puis de plus en plus de liquide, est envoyé (via la deuxième conduite 12 et la dérivation avec la vanne V4 puis via le collecteur 24 et la rampe 26) dans le fond de l'enceinte intermédiaire 20. Les vapeurs se condensent en passant à travers le liquide tout en faisant augmenter la température au sein de l'enceinte intermédiaire 20. Lors de cette opération de refroidissement de la pompe 6, les vannes V1 et V4 sont ouvertes. Pour le dégazage du système, la vanne V7 est avantageusement ouverte. À ce stade, on prévoit que la vanne V11 est fermée.

Lorsque la pompe 6 est refroidie et est en condition pour un fonctionnement nominal, elle peut alors être mise en route. La vanne V11 est alors ouverte et du liquide est envoyé vers l'équipement 8 qui peut être ainsi refroidi à son tour. Les vannes V1, V11 et V5 sont ouvertes. Comme expliqué plus haut, des vapeurs sont condensées au sein de l'enceinte intermédiaire 20 de récupération de chaleur et la température dans celle-ci augmente. Un dégazage peut être envisagé (vanne V7 ouverte).

Lorsque tous les éléments sont dans des conditions (notamment température) normales de fonctionnement, le ravitaillement du réservoir 4 peut commencer. La forme de réalisation préférée illustrée ici prévoit que les vapeurs issues du dégazage du réservoir 4 sont conduites vers l'enceinte intermédiaire 20. La vanne V10 est alors ouverte pour permettre ce dégazage. Comme expliqué précédemment, lorsque ce dernier débutera, on augmentera alors encore la température dans l'enceinte intermédiaire 20.

Le liquide utilisé pour remplir le réservoir 4 provient de préférence de l'enceinte intermédiaire 20. Pour remplir le réservoir 4, la vanne V1 est alors fermée et les vannes V3 et V11 ouvertes.

On peut remarquer ici que si la pression dans l'enceinte intermédiaire 20 est suffisante, il est inutile de prévoir une pompe pour remplir le réservoir 4. On peut aussi prévoir de débuter le remplissage du réservoir 4 sans utiliser la pompe 6 si la pression est suffisante puis de mettre la pompe 6 en marche quand la pression dans l'enceinte intermédiaire baisse. On peut envisager aussi de se servir du vaporisateur 28 pour maintenir dans l'enceinte intermédiaire 20 une pression suffisante à pousser le liquide hors de l'enceinte intermédiaire 20. Dans ce cas de figure, la pompe 6 peut être utilisée en fin de ravitaillement pour vider l'enceinte intermédiaire. On veillera à fermer la vanne V3 suffisamment tôt pour éviter toute injection de fluide en phase gazeuse dans la pompe 6.

S'il n'y a pas assez de liquide dans l'enceinte intermédiaire 20 pour remplir le réservoir 4, avant que l'enceinte intermédiaire 20 soit vide, on ouvre la vanne V1 et on vient fermer la vanne V3. Le ravitaillement est alors réalisé à partir de la cuve de stockage 2 directement.

Le liquide remplissant le réservoir 4 étant principalement en provenance de l'enceinte intermédiaire 20, on peut prévoir de modifier la température et/ou la pression au sein de cette enceinte intermédiaire 20 avant de commencer le ravitaillement. On effectue alors avant le début du ravitaillement une mesure de la température et de la pression dans l'enceinte intermédiaire 20. Si nécessaire, ces paramètres (température et pression) peuvent être adaptés à l'aide notamment du vaporisateur 28 et/ou du système de refroidissement 30. On agit alors sur les vannes V6 et V8 et/ou V9 pour augmenter la pression et/ou la température dans l'enceinte, le système de refroidissement permettant quant à lui de diminuer la température et/ou la pression.

Une fois le transfert effectué, la première conduite 10 est remplie de liquide depuis la cuve de stockage 2 jusqu'à la sortie de l'équipement 8 cryogénique tandis que la deuxième conduite 12 de dégazage contient un mélange de liquide et de gaz.

L'invention propose aussi de limiter autant que possible la vaporisation du liquide se trouvant dans le système après une opération de délivrance de liquide. Elle propose alors de réaliser une purge du système en repoussant un maximum de liquide vers la cuve de stockage 2 avant que celui-ci ne se vaporise.

Pour réaliser la purge, il est proposé, une fois le réservoir 4 rempli comme souhaité, de faire fonctionner le vaporiseur 28. La vanne V6 est ouverte, les vannes V7 et V9 fermées. Les vannes V1 et V3 sont ouvertes pour permettre de repousser le liquide restant dans le système vers la cuve de stockage 2. Pour également refouler le liquide se trouvant au niveau de la pompe 6 et de l'équipement 8, il est alors possible de fermer la vanne V3 et d'ouvrir les vannes V4 et V5. La configuration du système avec le point bas 16 va alors permettre une purge des conduites contenant du liquide grâce aux vapeurs qui vont repousser le liquide en direction de la cuve de stockage 2.

En effet, le liquide contenu dans la première conduite 10 descend par gravité vers le point bas 16. Il convient de remarquer ici que les extrémités distales de la première conduite 10 et de la deuxième conduite 12 sont fermées. Dans la conception de la première conduite 10, il sera veillé de préférence à ne pas laisser subsister de "piège" à liquide de manière que tout le liquide puisse redescendre avantageusement vers le point bas 16.

Fatalement, du fait des pertes thermiques inévitables dans tout système, du liquide se trouvant dans le système va se vaporiser. Du fluide va donc passer de la phase liquide à la phase gazeuse. Le fluide en phase gazeuse va s'accumuler à partir des zones les plus hautes dans le système. Le système étant fermé, au fur et à mesure que du liquide se vaporise, la pression va augmenter et le fluide en phase liquide est repoussé à travers la vanne V1 dans la cuve de stockage 2.

On peut prévoir que la phase de purge se termine lorsqu'il n'y a plus de fluide sous phase liquide au point bas 16 et que la phase gazeuse atteint donc le point bas 16.

Une fois la purge du système réalisée, les vannes V1 et V3 restent fermées jusqu'à la délivrance de liquide suivante.

En variante de réalisation (non illustrée), il est possible de prévoir d'installer la pompe 6 à l'intérieur de l'enceinte intermédiaire 20. En effet, il est habituel de placer une pompe cryogénique, telle la pompe 6, à l'intérieur d'une enceinte isolée thermiquement. Dans cette forme de réalisation, une enceinte cryogénique peut alors être économisée par rapport à la forme de réalisation illustrée sur la figure 2. On peut remarquer que dans cette forme de réalisation (pompe dans l'enceinte intermédiaire), le surcout d'une installation selon la présente invention est très limité par rapport à une installation similaire de l'art antérieur.

Une autre variante de réalisation prévoit que la vanne V3 soit un distributeur avec des moyens de commande associés qui permette de réaliser un mélange dynamique entre le liquide en provenance de la cuve de stockage 2 et le liquide de l'enceinte intermédiaire 20. Certes variante permet notamment de réaliser un "robinet mélangeur" et donc d'adapter la température du liquide envoyé vers le réservoir 4 à remplir.

Une autre variante à la portée de l'homme du métier est de remplacer la cuve de stockage qui est représentée très schématiquement sur la figure 2 par une cuve à thermosiphon. Dans ce cas, les conduites comprenant les vannes V2 et V4 sont par exemple reliées à la partie supérieure de l'enceinte intermédiaire 20 et permettent d'assurer le dégazage réalisé dans la forme de réalisation de la figure 2 par la vanne V7.

À titre d'exemple numérique purement illustratif et non limitatif, des valeurs numériques sont indiquées ci-après en référence à la figure 2.

La pompe 6 est disposée dans une enceinte pour la maintenir froide, notamment lorsqu'elle ne fonctionne pas. Seul un refroidissement rapide est alors nécessaire avant chaque utilisation. Le liquide cryogénique utilisé est du gaz naturel liquéfié.

Dans la cuve de stockage, la pression est par exemple de 3 bars et la température de -146 °C.

Lors d'une première étape, 130 litres de gaz naturel liquéfié sont transférés vers l'enceinte intermédiaire 20. Ce liquide vient refroidir l'enceinte intermédiaire et les 130 l se retrouvent alors dans ladite enceinte à 6 bars et à -134 °C.

Une deuxième étape est alors prévue pour refroidir la pompe. On a alors toujours 130 l de gaz naturel liquéfié dans l'enceinte intermédiaire mais à une pression de 10,5 bars et à une température de -123 °C. La température augmente ici à cause de la chaleur apportée par le refroidissement de la pompe.

Une troisième étape prévoit le refroidissement de l'équipement 8. On vient alors rajouter du gaz naturel liquéfié dans l'enceinte intermédiaire 20 qui contient par exemple 260 l de gaz naturel liquéfié. La pression augmente encore pour atteindre 14 bars et la température monte à -116 °C.

L'étape suivante consiste alors à vider l'enceinte intermédiaire 20 à l'aide de la pompe 6. Cette opération est arrêtée peu avant de vider complètement l'enceinte intermédiaire.

La dernière étape est une étape de purge du système au cours de la quelle autant de liquide que possible est à nouveau refoulé vers la cuve de stockage.

La présente invention permet ainsi d'éviter dans une large mesure que la chaleur provenant du refroidissement des divers composants (pompe et/ou divers équipements) ne soit introduite -sous forme de vapeurs notamment-dans la cuve de stockage. De la sorte, le liquide cryogénique dans cette cuve reste froid plus longtemps.

La chaleur récupérée lors d'opérations de refroidissement est récupérée pour être envoyée vers le conteneur à remplir où elle est souvent nécessaire pour saturer le liquide. En outre, le conteneur à remplir étant, d'une part, de taille réduite et, d'autre part, destiné à être vidé assez rapidement (quelques jours maximum en général), les problèmes d'entrées de chaleur y sont moins critiques.

L'invention telle que décrite permet aussi de remplacer dans une installation de délivrance de fluide cryogénique, après une opération de délivrance de liquide depuis une cuve de stockage vers un conteneur, le liquide résiduel par du gaz. De la sorte, on limite l'introduction de gaz dans la cuve de stockage, le fluide résiduel étant réintroduit sous forme liquide dans la cuve de stockage. De cette manière, on limite la vaporisation de liquide cryogénique. Les entrées de chaleur dans le système sont limitées également de cette manière et le liquide dans la cuve de stockage reste assez froid pour garantir de bonnes conditions de stockage sur une plus longue période.

Le système et/ou le procédé selon la présente invention permettent aussi, notamment dans le cas où le liquide cryogénique est du gaz naturel liquéfié, de limiter les pertes de gaz naturel en limitant l'augmentation de pression dans la cuve de stockage et de ce fait le nombre de déclenchements de la soupape de sécurité associée à cette cuve.

Bien entendu, la présente invention ne se limite pas à la forme de réalisation de l'installation illustrée sur le dessin, aux variantes évoquées dans la description qui précède et au procédé décrit plus haut. Elle concerne également toutes les variantes de réalisation à la portée de l'homme du métier dans le cadre des revendications ci-après.

## Revendications

1. Installation de délivrance de liquide cryogénique à partir d'une cuve de stockage (2) comportant :
- un équipement cryogénique (6, 8) permettant de délivrer et/ou traiter du liquide cryogénique de la cuve de stockage (2) vers un conteneur (4) à remplir, et
- une enceinte intermédiaire (20),
- des moyens d'alimentation en liquide cryogénique à partir de la cuve de stockage (2) vers l'enceinte intermédiaire (20),
**caractérisée en ce qu'**elle comporte en outre
- des moyens d'alimentation (10) en liquide cryogénique soit par la cuve de stockage, soit par l'enceinte intermédiaire et de refroidissement (V1, V2, 12) de l'équipement cryogénique (6, 8) ;
- une liaison permettant de conduire du fluide issu de la vaporisation du liquide cryogénique et sortant de l'équipement cryogénique (6, 8) vers l'enceinte intermédiaire (20), et
- des moyens de délivrance de liquide cryogénique vers le conteneur (4) à remplir, à travers l'équipement cryogénique (6, 8), à partir de l'enceinte intermédiaire (20) et/ou de la cuve de stockage (2).

2. Installation selon la revendication 1, **caractérisée en ce que** l'enceinte intermédiaire (20) est disposée de telle sorte par rapport à la cuve de stockage (2) que du liquide cryogénique puisse être transféré de la cuve de stockage (2) vers l'enceinte intermédiaire (20) par gravité.

3. Installation selon l'une des revendications 1 ou 2, **caractérisée en ce que** l'enceinte intermédiaire (20) est équipée d'un système de refroidissement (30).

4. Installation selon l'une des revendications 1 à 3, **caractérisée en ce que** l'enceinte intermédiaire (20) est équipée d'un vaporisateur (28) en circuit fermé avec l'enceinte intermédiaire (20), le vaporisateur (28) étant relié en amont à une zone inférieure de l'enceinte intermédiaire (20).

5. Installation selon l'une des revendications 1 à 4, **caractérisée en ce que** l'équipement cryogénique (6, 8) comporte une pompe cryogénique (6).

6. Installation selon la revendication 5, **caractérisée en ce que** la pompe cryogénique est disposée à l'intérieur de l'enceinte intermédiaire.

7. Installation selon l'une des revendications 1 à 6, **caractérisée en ce qu'**une ligne de dégazage est prévue pour permettre un dégazage d'un conteneur (4) à remplir vers l'enceinte intermédiaire (20).

8. Installation selon l'une des revendications 1 à 7, **caractérisée en ce qu'**elle présente un point bas (16) entre la cuve de stockage (2) et l'équipement cryogénique (6, 8).

9. Installation selon la revendication 8, **caractérisée en ce qu'**elle est conçue de manière à présenter en aval du point bas (16) une inclinaison de même sens en direction du conteneur (4) à remplir.

10. Procédé de délivrance d'un liquide cryogénique à partir d'une cuve de stockage (2) vers un conteneur (4) à remplir, à travers un équipement cryogénique (6, 8) permettant de délivrer et/ou de traiter du liquide cryogénique de la cuve de stockage (2) vers le conteneur (4) à remplir, comportant une étape de :
a) remplissage partiel d'une enceinte intermédiaire (20) avec du liquide cryogénique en provenance de la cuve de stockage (2),
**caractérisé en ce qu'**il comporte en outre les étapes suivantes :
b) refroidissement de l'équipement cryogénique (6, 8) en alimentant l'équipement cryogénique (6, 8) en liquide cryogénique et en retournant le fluide sortant de l'équipement au moins partiellement dans l'enceinte intermédiaire (20),
c) après refroidissement de l'équipement cryogénique (6, 8), délivrance de liquide cryogénique vers le conteneur (4) à remplir à travers l'équipement cryogénique (6, 8) à partir de l'enceinte intermédiaire (20) et/ou de la cuve de stockage (2).

11. Procédé selon la revendication 10, **caractérisé en ce que** l'étape de délivrance de fluide cryogénique est réalisée en ajustant la pression dans l'enceinte intermédiaire (20) de manière à pousser du liquide cryogénique vers le conteneur (4) à remplir.

12. Procédé selon l'une des revendications 10 ou 11, **caractérisé en ce qu'**une étape de régulation de la température et/ou de la pression est réalisée dans l'enceinte intermédiaire (20) après refroidissement de l'équipement cryogénique (6, 8).

## Patentansprüche

1. Anlage zur Abgabe von kryogener Flüssigkeit aus einem Speichertank (2), umfassend:
- eine kryogene Ausrüstung (6, 8) zum Abgeben und/oder Behandeln von kryogener Flüssigkeit aus dem Speichertank (2) zu einem zu befüllenden Behälter (4) und
- eine Zwischenkammer (20),
- Mittel zum Zuführen von kryogener Flüssigkeit aus dem Speichertank (2) zu der Zwischenkammer (20),
**dadurch gekennzeichnet, dass** sie ferner umfasst
- Mittel zum Zuführen (10) von kryogener Flüssigkeit entweder durch den Speichertank oder durch die Zwischen- und Kühlkammer (V1, V2, 12) der kryogenen Ausrüstung (6, 8);
- eine Verbindung, die es ermöglicht, Fluid, das aus der Verdampfung der kryogenen Flüssigkeit resultiert und die kryogene Ausrüstung (6, 8) verlässt, zu der Zwischenkammer (20) zu leiten, und
- Mittel zur Abgabe von kryogener Flüssigkeit an den zu befüllenden Behälter (4) durch die kryogene Ausrüstung (6, 8) aus der Zwischenkammer (20) und/oder dem Speichertank (2).

2. Anlage nach Anspruch 1, **dadurch gekennzeichnet, dass** die Zwischenkammer (20) in Bezug auf den Speichertank (2) so angeordnet ist, dass kryogene Flüssigkeit durch Schwerkraft aus dem Speichertank (2) zu der Zwischenkammer (20) weitergeleitet werden kann.

3. Anlage nach einem der Ansprüche 1 oder 2, **dadurch gekennzeichnet, dass** die Zwischenkammer (20) mit einem Kühlsystem (30) ausgestattet ist.

4. Anlage nach einem der Ansprüche 1 bis 3, **dadurch gekennzeichnet, dass** die Zwischenkammer (20) mit einem Verdampfer (28) im geschlossenen Kreislauf mit der Zwischenkammer (20) ausgestattet ist, wobei der Verdampfer (28) mit einem unteren Bereich der Zwischenkammer (20) stromaufwärts verbunden ist.

5. Anlage nach einem der Ansprüche 1 bis 4, **dadurch gekennzeichnet, dass** die kryogene Ausrüstung (6, 8) eine kryogene Pumpe (6) umfasst.

6. Anlage nach Anspruch 5, **dadurch gekennzeichnet, dass** die kryogene Pumpe im Inneren der Zwischenkammer angeordnet ist.

7. Anlage nach einem der Ansprüche 1 bis 6, **dadurch gekennzeichnet, dass** eine Entgasungsleitung vorgesehen ist, um eine Entgasung eines zu befüllenden Behälters (4) in die Zwischenkammer (20) zu ermöglichen.

8. Anlage nach einem der Ansprüche 1 bis 7, **dadurch gekennzeichnet, dass** sie einen Tiefpunkt (16) zwischen dem Speichertank (2) und der kryogenen Ausrüstung (6, 8) aufweist.

9. Anlage nach Anspruch 8, **dadurch gekennzeichnet, dass** sie so ausgebildet ist, dass sie stromabwärts des Tiefpunktes (16) eine gleichgerichtete Neigung in Richtung des zu befüllenden Behälters (4) aufweist.

10. Verfahren zur Abgabe einer kryogenen Flüssigkeit aus einem Speichertank (2) an einen zu befüllenden Behälter (4), durch eine kryogene Ausrüstung (6, 8) zum Abgeben und/oder Behandeln von kryogener Flüssigkeit aus dem Speichertank (2) an den zu befüllenden Behälter (4), umfassend einen Schritt der:
a) Teilbefüllung einer Zwischenkammer (20) mit kryogener Flüssigkeit aus dem Speichertank (2),
**dadurch gekennzeichnet, dass** er ferner die folgenden Schritte umfasst:
b) Kühlen der kryogenen Ausrüstung (6, 8) durch Zuführen von kryogener Flüssigkeit in die kryogene Ausrüstung (6, 8) und Rückführen der die Ausrüstung verlassenden Flüssigkeit mindestens teilweise in die Zwischenkammer (20),
c) nach dem Abkühlen der kryogenen Ausrüstung (6, 8), Abgeben von kryogener Flüssigkeit an den zu befüllenden Behälter (4) durch die kryogene Ausrüstung (6, 8) aus der Zwischenkammer (20) und/oder aus dem Speichertank (2).

11. Verfahren nach Anspruch 10, **dadurch gekennzeichnet, dass** der Schritt des Abgebens von kryogener Flüssigkeit durch Einstellen des Drucks in der Zwischenkammer (20) so durchgeführt wird, dass die kryogene Flüssigkeit zu dem zu befüllenden Behälter (4) gedrückt wird.

12. Verfahren nach einem der Ansprüche 10 oder 11, **dadurch gekennzeichnet, dass** ein Temperatur- und/oder Druckregelungsschritt in der Zwischenkammer (20) nach dem Abkühlen der kryogenen Ausrüstung (6, 8) durchgeführt wird.

## Claims

1. A facility for delivering cryogenic liquid from a storage tank (2) comprising:
- a cryogenic device (6, 8) for delivering and/or treating cryogenic liquid from the storage tank (2) to a container (4) to be filled, and
- an intermediate vessel (20),
- means for supplying cryogenic liquid from the storage tank (2) to the intermediate vessel (20),
**characterized in that** it also comprises
- means (10) for supplying cryogenic liquid either from the storage tank or from the intermediate vessel and for cooling (V1, V2, 12) the cryogenic device (6, 8);
- a connection for conducting fluid resulting from the vaporization of the cryogenic liquid and exiting from the cryogenic device (6, 8) toward the intermediate vessel (20), and
- means for delivering cryogenic liquid to the container (4) to be filled, via the cryogenic device (6, 8), from the intermediate vessel (20) and/or the storage tank (2).

2. The facility according to claim 1, **characterized in that** the intermediate vessel (20) is arranged in such a way with respect to the storage tank (2) that cryogenic liquid can be transferred from the storage tank (2) to the intermediate vessel (20) by gravity.

3. The facility according to one of claims 1 or 2, **characterized in that** the intermediate vessel (20) is equipped with a cooling device (30).

4. The facility according to one of claims 1 to 3, **characterized in that** the intermediate vessel (20) is equipped with a vaporizer (28) in a closed circuit with the intermediate vessel (20), the vaporizer (28) being connected upstream to a lower zone of the intermediate vessel (20).

5. The facility according to one of claims 1 to 4, **characterized in that** the cryogenic device (6, 8) comprises a cryogenic pump (6).

6. The facility according to claim 5, **characterized in that** the cryogenic pump is arranged inside the intermediate vessel.

7. The facility according to one of claims 1 to 6, **characterized in that** a degassing line is provided to allow degassing of a container (4) to be filled toward the intermediate vessel (20).

8. The facility according to one of claims 1 to 7, **characterized in that** it has a low point (16) between the storage tank (2) and the cryogenic device (6, 8).

9. The facility according to claim 8, **characterized in that** it is designed to have downstream of the low point (16) an inclination in the same direction towards the container (4) to be filled.

10. A method for delivering a cryogenic liquid from a storage tank (2) to a container (4) to be filled, via a cryogenic device (6, 8) making it possible to deliver and/or treat cryogenic liquid from the storage tank (2) to the container (4) to be filled, comprising a step of:
a) partially filling an intermediate vessel (20) with cryogenic liquid from the storage tank (2),
**characterized in that** it also comprises the following steps:
b) cooling the cryogenic device (6, 8) by supplying the cryogenic device (6, 8) with cryogenic liquid and by returning the fluid leaving the device at least partially into the intermediate vessel (20),
c) after cooling the cryogenic device (6, 8), delivering cryogenic liquid to the container (4) to be filled via the cryogenic device (6, 8) from the intermediate vessel (20) and/or the storage tank (2).

11. The method according to claim 10, **characterized in that** the step of delivering cryogenic fluid is carried out by adjusting the pressure in the intermediate vessel (20) so as to push cryogenic liquid towards the container (4) to be filled.

12. The method according to one of claims 10 or 11, **characterized in that** a temperature and/or pressure control step is carried out in the intermediate vessel (20) after cooling the cryogenic device (6, 8).
